**Europäisches Patentamt**

**European Patent Office**

**Office européen des brevets**

(19)

(11) Veröffentlichungsnummer : **0 100 485**
**B1**

(12) # EUROPÄISCHE PATENTSCHRIFT

(45) Veröffentlichungstag der Patentschrift :
**12.02.86**

(51) Int. Cl.⁴ : **A 23 J   7/00**

(21) Anmeldenummer : **83107103.0**

(22) Anmeldetag : **20.07.83**

(54) **Verfahren zur Gewinnung von Lecithin.**

(30) Priorität : **04.08.82 DE 3229041**

(43) Veröffentlichungstag der Anmeldung :
**15.02.84 Patentblatt 84/07**

(45) Bekanntmachung des Hinweises auf die Patenterteilung : **12.02.86 Patentblatt 86/07**

(84) Benannte Vertragsstaaten :
**AT BE CH FR GB IT LI LU NL SE**

(56) Entgegenhaltungen :
**FR-A- 1 235 902**
**GB-A- 2 072 189**

(73) Patentinhaber : **Fried. Krupp Gesellschaft mit beschränkter Haftung**
**Altendorfer Strasse 103**
**D-4300 Essen 1 (DE)**

(72) Erfinder : **Coenen, Hubert, Dr.**
**Wortbergrode 13**
**D-4300 Essen 1 (DE)**
Erfinder : **Eggers, Rudolf, Dr.**
**Stader Strasse 68**
**D-2150 Buxtehude (DE)**
Erfinder : **Hagen, Rainer**
**Schäferstrasse 24**
**D-4300 Essen (DE)**

## Beschreibung

Die Erfindung betrifft ein Verfahren zur Gewinnung von Lecithin aus den bei der Herstellung pflanzlicher Fette und Öle anfallenden Schleimstoffen durch Extraktion der Schleimstoffe mit einem unter Normalbedingungen (0 °C, 1 bar) gasförmigen Lösungsmittel.

Lecithin ist ein Gemisch verschiedener Phosphatide, die insbesondere zur Gruppe der Lecithine und Kephaline gehören. Phosphatide sind fettähnliche, in Kohlenwasserstoffen lösliche und in Aceton unlösliche Triglyceride, bei denen die Phosphorsäure einen Fettsäurerest ersetzt und mit der OH-Gruppe des Cholins, Colamins, Serins, Inosits oder einer anderen serinähnlichen Base verestert ist. Da die Phosphatide in einem Molekül sowohl lipophile und hydrophile als auch saure und basische Gruppen enthalten, wird Lecithin insbesondere als Emulgator benutzt. Außerdem wird Lecithin als Futtermittelzusatz sowie zur Herstellung kosmetischer und pharmazeutischer Präparate verwendet.

Bei den Phosphatiden handelt es sich um Naturstoffe, die gemeinsam mit tierischen und pflanzlichen Fetten vorkommen, z. B. im Eigelb und in der Sojabohne. Insbesondere die durch Schmelzen, Pressen und/oder Extrahieren von Früchten und Samen gewonnenen rohen Pflanzenöle und -fette enthalten mehr oder weniger Phosphatide, die durch Behandlung der von Feststoffen befreiten rohen Pflanzenöle und -fette mit Wasser, Wasser- dampf und/oder verdünnten Säuren als Schleimstoffe ausfallen. Diese Schleimstoffe werden abzentrifugiert und enthalten außer den Phosphatiden noch Öle bzw. Fette, Fettsäuren, Bitterstoffe und Farbstoffe. Die auch als Rohlecithin bezeichneten Schleimstoffe werden durch einen Reinigungsprozeß zu Lecithin verarbeitet, das dann zur Herstellung, Verarbeitung und Konservierung von Lebensmitteln sowie pharmazeutischen und kosmetischen Präparaten verwendet werden kann.

Aus der DE-A-3 011 185 ist ein Verfahren zur Gewinnung von Lecithin aus Rohlecithin bekannt, bei dem das Rohlecithin mit einem Gas, das sich bezüglich seines Drucks und seiner Temperatur im überkritischen Zustand befindet, in einer Extraktionsstufe behandelt wird, bei dem dann die extrakthaltige überkritische Gasphase von der Extraktionsstufe in eine Abscheiderstufe geführt wird, wo durch Druck- und/oder Temperaturänderung eine Trennung in Gas und Extrakt erfolgt, und bei dem das gereinigte Lecithin aus der Extraktionsstufe entnommen und das Gas in die Extraktionsstufe zurückgeführt wird. Bei diesem Verfahren sollen als Extraktionsmittel gasförmige halogenierte Kohlenwasserstoffe sowie die Gase $CO_2$, $SF_6$, $N_2O$, $SO_2$, $C_2H_6$, $C_2H_4$, $C_3H_8$ und/oder $C_3H_6$ verwendet werden. Wenn $CO_2$ als Extraktionsmittel eingesetzt wird, arbeitet die Extraktionsstufe bei einem Druck von 72 bis 800 bar sowie einer Temperatur von 31,3 bis 100 °C und die Abscheiderstufe bei einem Druck von 10 bis 72 bar sowie einer Temperatur von 10 bis 32 °C. Der aus der überkritischen Gasphase abgeschiedene Extrakt besteht aus den im Rohlecithin vorhandenen Begleitstoffen, insbesondere aus Fetten bzw. Ölen und Wasser. Das aus der DE-A-3 011 185 bekannte Verfahren hat den Nachteil, daß die Extraktionszeit, die vorzugsweise 3 bis 7 Stunden betragen soll, recht hoch ist, was durch eine geringe Löslichkeit der Begleitstoffe des Rohlecithins in der überkritischen Gasphase verursacht wird.

Der Erfindung liegt die Aufgabe zugrunde, ein Verfahren zur Gewinnung von Lecithin zu schaffen, das gegenüber dem bekannten Verfahren eine verbesserte Reinigungsleistung (verkürzte Extraktionszeit) hat sowie ein physiologisch unbedenkliches und qualitativ hochwertiges Endprodukt liefert. Ferner sollen mit dem Verfahren nach der Erfindung Schleimstoffe unterschiedlicher Herkunft zu Lecithin verarbeitet werden.

Die der Erfindung zugrundeliegende Aufgabe wird dadurch gelöst, daß die Schleimstoffe bei einem Druck von $2 \times p_k$ bis 500 bar sowie einer Temperatur von 0 °C bis $< T_k$ ($p_k$ = kritischer Druck, $T_k$ = kritische Temperatur des gasförmigen Lösungsmittels) während 15 bis 60 Minuten extrahiert werden, daß danach die beladene komprimierte Lösungsmittelphase vom unlöslichen Lecithin abgetrennt wird, daß anschließend aus der beladenen komprimierten Lösungsmittelphase die extrahierten Stoffe durch Druckerniedrigung oder Druckerniedrigung und Temperaturerhöhung abgeschieden werden, daß das gasförmige Lösungsmittel in die Extraktionsstufe zurückgeführt wird und daß das Lecithin nach der Entnahme aus der Extraktionsstufe durch Verdampfen des Lösungsmittels in fester Form gewonnen wird. Die Vorschrift, bei einem unteren Druckgrenzwert von $2 \times p_k$ und einem oberen Temperaturgrenzwert von $< T_k$ zu arbeiten, besagt, daß mindestens bei doppeltem kritischen Druck bzw. nahe unterhalb der kritischen Temperatur extrahiert werden soll (z. B. bei $T_k - 2$ °C).

Nach dem erfindungsgemäßen Verfahren können Schleimstoffe verarbeitet werden, die bei der Gewinnung aller pflanzlichen Fette und Öle anfallen. Das nach dem erfindungsgemäßen Verfahren hergestellte Lecithin ist qualitativ hochwertig und muß nicht gebleicht werden, da die Extraktion mit dem unter Normalbedingungen gasförmigen Lösungsmittel bei schonenden Temperaturen und in Abwesenheit von Sauerstoff erfolgt. Da nach der DE-A-3 011 185 zur Lecithingewinnung überkritische Gase verwendet werden sollen und nach der DE-B-1 493 190 viele organische Verbindungen in überkritisch Gasen besonders gut löslich sind, war es außerordentlich überraschend, daß ein unter Normalbedingungen gasförmiges Lösungsmittel, dessen Druck überkritischen und dessen Temperatur unterkritisch ist, die Begleitstoffe des Rohlecithins besser löst als ein überkritisch Gas, während es die Phosphatide nicht aufnimmt. Ferner konnte nicht erwartet werden, daß die Begleitstoffe der Phosphatide bei einem Druck von $2 \times T_k$ bis 500 bar mit hoher Selektivität schnell in Lösung gehen. Das erfindungsgemäße Verfahren hat also eine hohe Trennwirkung und eine große Reinigungsleistung. Ferner ist es vorteilhaft, daß man das erfindungsgemäße Verfahren sowohl diskontinuierlich als auch kontinuierlich durchführen kann.

In weiterer Ausgestaltung der Erfindung ist vorgesehen, daß als gasförmiges Lösungsmittel Kohlendioxid, Äthan und/oder Äthen oder eine Mischung aus einem oder mehreren dieser Gase mit Methan, Propan und/oder Propen verwendet wird. Diese Lösungsmittel können sowohl aus dem Extrakt (Begleitstoffe des Rohlecithins) als auch aus dem Extraktionsrückstand (Lecithin) ohne Schwierigkeiten bei Raumtemperatur und Normaldruck quantitativ abgetrennt werden, und es ist ferner möglich, die Gase weitgehend verlustfrei zurückzugewinnen. Die gasförmigen Lösungsmittel verhalten sich gegenüber dem Lecithin chemisch inert und hinterlassen im Lecithin keine physiologisch bedenklichen Rückstände. Es ist überraschend, daß die Phosphatide in den komprimierten gasförmigen Lösungsmitteln nicht löslich sind, da diese Verbindungen doch einen fettähnlichen Charakter haben und bei Normaldruck von flüssigen Kohlenwasserstoffen (Hexan, Benzin) gelöst werden.

Nach der Erfindung kann die Trennwirkung in einigen Fällen noch dadurch erhöht werden, daß das gasförmige Lösungsmittel ein Schleppmittel, vorzugsweise Äthanol, enthält. Äthanol ist deshalb besonders gut als Schleppmittel geeignet, weil es im Lecithin keine physiologisch bedenklichen Rückstände hinterläßt und aus dem Lecithin nicht quantitativ abgetrennt werden muß. Obwohl auch Methanol, Propanol, Aceton, Methyläthylketon, Methylacetat, Äthylacetat, Äthylformiat und Butanol als Schleppmittel geeignet sind, wird man diese Verbindungen nach Möglichkeit nicht bei der Lecithingewinnung verwenden, um potentielle Gefahren zu vermeiden, die sich aus dem Gebrauch flüssiger organischer Lösungsmittel ergeben können.

Das erfindungsgemäße Verfahren kann besonders erfolgreich durchgeführt werden, wenn die Schleimstoffe mit Äthan bei 250 bis 350 bar sowie 15 bis 31 °C extrahiert werden und wenn die Abscheidung der extrahierten Stoffe aus der beladenen komprimierten Lösungsmitellphase bei 30 bis 40 bar sowie 20 bis 40 °C erfolgt. Ferner kann das erfindungsgemäße Verfahren besonders erfolgreich durchgeführt werden, wenn die Schleimstoffe mit Kohlendioxid bei 300 bis 500 bar sowie 5 bis 30 °C extrahiert werden und wenn die Abscheidung der extrahierten Stoffe aus der beladenen komprimierten Lösungsmittelphase bei 10 bis 30 bar sowie 5 bis 30 °C erfolgt. Das auf diesen beiden Wegen gewonnene Lecithin hat einen Gehalt an Acetonunlöslichem von mindestens 90 %. Der Gehalt an Acetonunlöslichem ist ein Maß für den Lecithingehalt des Endprodukts.

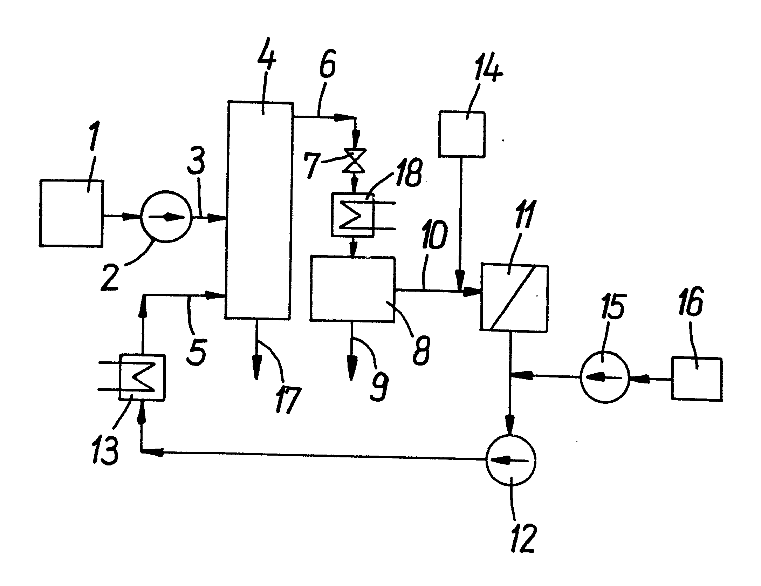

Der Gegenstand der Erfindung wird nachfolgend anhand der Zeichnung und eines Ausführungsbeispiels näher erläutert.

Aus einem Vorratstank 1 werden die Schleimstoffe von der Pumpe 2 durch die Leitung 3 in den Autoklaven 4 gefördert. Das komprimierte Lösungsmittel gelangt durch die Leitung 5 in den Autoklaven 4, wo es im Gegenstrom zu den Schleimstoffen geführt wird und Wasser, Fettsäuren, Bitterstoffe sowie Fette und Öle aufnimmt. Die nachfolgenden Werte zeigen, daß $CO_2$ bei einem weit oberhalb des kritischen Drucks liegenden Druck und bei unterkritischer Temperatur gegenüber dem flüssigen und dem überkritischen Zustand für Sojaöl eine unerwartet hohe Löslichkeit hat.

Löslichkeit von Sojaöl in $CO_2$ bei :

25 °C, 70 bar = 0,1 g Öl/kg $CO_2$ (flüssig, unterkritisch)
41 °C, 350 bar = 1,3 g Öl/kg $CO_2$ (überkritisch)
25 °C, 300 bar = 6,2 g Öl/kg $CO_2$ (erfindungsgemäße Bedingungen)

Die beladene komprimierte Lösungsmittelphase hat gegenüber der Lecithinphase eine geringere Dichte und verläßt den Autoklaven 4 über die Leitung 6. Sie wird vom Ventil 7 in den Abscheider 8 entspannt, dem noch ein Wärmeaustauscher 18 vorgeschaltet ist. Durch die Druckerniedrigung oder durch die gleichzeitige Druckerniedrigung und Temperaturerhöhung fallen die extrahierten Stoffe aus der Lösungsmittelphase aus und werden dem Abscheider 8 über die Leitung 9 entnommen. Das entspannte und vom Extrakt befreite Lösungsmittel gelangt aus dem Abscheider 8 über die Leitung 10 in den Kondensator 11, wo es verflüssigt wird. Das verflüssigte Lösungsmittel wird vom Verdichter 12 auf den Extraktionsdruck und vom Wärmeaustauscher 13 auf die Extraktionstemperatur gebracht. Lösungsmittelverluste werden dadurch ausgeglichen, daß dem Extraktionskreislauf aus dem Vorratsgefäß 14 Lösungsmittel zugeführt wird. Das Schleppmittel kann dem verflüssigten Lösungsmittel über die Pumpe 15 aus dem Tank 16 zudosiert werden.

Im Autoklaven 4 bleibt das Lecithin zurück, das entweder in Form eines Pulvers oder eines festen Blocks anfällt. Das Lecithin kann dem Autoklaven 4 diskontinuierlich oder kontinuierlich entnommen werden. Bei diskontinuierlicher Arbeitsweise wird der Autoklav 4 zunächst entspannt, wodurch die gasförmigen Lösungsmittelreste aus dem Lecithin austreten, das anschließend aus dem Autoklaven 4 mechanisch entfernt wird. Bei kontinuierlicher Arbeitsweise fließt das Lecithin in Form einer Suspension ständig über die Leitung 17 ab und wird anschließend vom Lösungsmittel befreit. Das Lecithin bildet nur dann eine fließfähige Suspension, wenn es bei der Extraktion als Pulver anfällt. Auch ein geringer Restgehalt an Äthanol macht das Lecithin etwas fließfähiger. Nach dem erfindungsgemäßen Verfahren kann der Ölgehalt des Lecithins genau eingestellt werden, was zur Qualitätssicherung des Endprodukts beiträgt.

700 g aus Sojaöl gewonnene Schleimstoffe werden mit 8,9 kg/h Äthan im Autoklaven 4 bei 280 bar und 20 °C während 45 Minuten extrahiert. Die Schleimstoffe enthielten ca. 37 % Sojaöl und freie Fettsäuren, 62 % Acetonunlösliches und 1 % Wasser. Die beladene komprimierte Lösungsmittelphase wurde bei 36 bar und 30 °C in ihre Bestandteile zerlegt. Dem Abscheider 8 wurde das extrahierte Öl kontinuierlich entnommen, das in geringen Mengen Wasser und Fettsäuren sowie 2 % Acetonunlösliches enthielt. Aus dem Autoklaven 4 wurde Reinlecithin entnommen, das einen Erweichungspunkt von 54 °C hatte, gelblich-weiß gefärbt war und 92,7 % Acetonunlösliches enthielt.

Die nachfolgende Tabelle enthält die kritischen Daten der zur Lecithingewinnung verwendeten gasförmigen Lösungsmittel.

| Gas | $p_k$ (bar) | $T_k$ ($^oC$) |
|---|---|---|
| $CO_2$ | 73,9 | 31,0 |
| $CH_4$ | 48,0 | − 81,5 |
| $C_2H_6$ | 48,9 | 32,1 |
| $C_2H_4$ | 51,2 | 10,0 |
| $C_3H_8$ | 42,6 | 96,7 |
| $C_3H_6$ | 46,0 | 92,0 |

**Patentansprüche**

1. Verfahren zur Gewinnung von Lecithin aus den bei der Herstellung pflanzlicher Fette und Öle anfallenden Schleimstoffen durch Extraktion der Schleimstoffe mit einem unter Normalbedingungen gasförmigen Lösungsmittel, dadurch gekennzeichnet, daß die Schleimstoffe bei einem Druck von 2 × $p_k$ bis 500 bar sowie einer Temperatur von 0 °C bis < $T_k$ während 15 bis 60 Minuten extrahiert werden, daß danach die beladene komprimierte Lösungsmittelphase vom unlöslichen Lecithin abgetrennt wird, daß anschließend aus der beladenen komprimierten Lösungsmittelphase die extrahierten Stoffe durch Druckerniedrigung oder Druckerniedrigung und Temperaturerhöhung abgeschieden werden, daß das gasförmige Lösungsmittel in die Extraktionsstufe zurückgeführt wird und daß das Lecithin nach der Entnahme aus der Extraktionsstufe durch Verdampfen des Lösungsmittels in fester Form gewonnen wird.

2. Verfahren nach Anspruch 1, dadurch gekennzeichnet, daß als gasförmiges Lösungsmittel Kohlendioxid, Äthan und/oder Äthen oder eine Mischung aus einem oder mehreren dieser Gase mit Methan, Propan und/oder Propen verwendet wird.

3. Verfahren nach den Ansprüchen 1 und 2, dadurch gekennzeichnet, daß das gasförmige Lösungsmittel ein Schleppmittel, vorzugsweise Äthanol, enthält.

4. Verfahren nach den Ansprüchen 1 bis 3, dadurch gekennzeichnet, daß die Schleimstoffe mit Äthan bei 250 bis 350 bar sowie 15 bis 31 °C extrahiert werden und daß die Abscheidung der extrahierten Stoffe aus der beladenen komprimierten Lösungsmittelphase bei 30 bis 40 bar sowie 20 bis 40 °C erfolgt.

5. Verfahren nach den Ansprüchen 1 bis 3, dadurch gekennzeichnet, daß die Schleimstoffe mit Kohlendioxid bei 300 bis 500 bar sowie 5 bis 30 °C extrahiert werden und daß die Abscheidung der extrahierten Stoffe aus der beladenen komprimierten Lösungsmittelphase bei 10 bis 30 bar sowie 5 bis 30 °C erfolgt.

**Claims**

1. Process for obtaining lecithin from the mucins occurring in the production of vegetable fats and oils, by extraction of the mucins with a solvent which is gaseous under normal conditions, characterised in that the mucins are extracted at a pressure of 2 × $p_k$ to 500 bars and a temperature of 0 °C to < $T_k$ for 15 to 60 minutes, in that then the charged compressed solvent phase is separated from the insoluble lecithin, in that next the extracted substances are precipitated out of the charged compressed solvent phase by pressure reduction or by pressure reduction and temperature elevation, in that the gaseous solvent is returned into the extraction stage and in that the lecithin, after the withdrawal from the extraction stage, is obtained in solid form by evaporation of the solvent.

2. Process according to Claim 1, characterised in that as gaseous solvent there are used carbon dioxide, ethane and/or ethylene or a mixture of one or more of these gases with methane, propane and/or propylene.

4

3. Process according to Claims 1 and 2, characterised in that the gaseous solvent contains an entrainer, preferably ethanol.

4. Process according to Claims 1 to 3, characterised in that the mucins are extracted with ethane at 250 to 350 bars and 15 to 31 °C and in that the precipitation of the extracted substances out of the charged compressed solvent phase takes place at 30 to 40 bars and 20 to 40 °C.

5. Process according to Claims 1 to 3, characterised in that the mucins are extracted with carbon dioxide at 300 to 500 bars and 5 to 30 °C and in that the precipitation of the extracted substances out of the charged compressed solvent phase takes place at 10 to 30 bars and 5 to 30 °C.

## Revendications

1. Procédé d'obtention de lécithine à partir des mucilages provenant de la fabrication de graisses et d'huiles végétales par l'extraction des mucilages à l'aide d'un solvant se présentant sous forme de gaz dans les conditons normales, caractérisé en ce que les mucilages sont soumis à une extraction pendant 15 à 60 minutes sous une pression comprise entre $2 \times p_k$ et 500 bars et à une température comprise entre 0 °C et $< T_k$, en ce qu'ensuite la phase de solvant comprimée chargée est séparée de la lécithine insoluble, en ce qu'ensuite les substances extraites sont isolées de la phase de solvants comprimée chargée par réduction de la pression ou par réduction de la pression et augmentation de la température, en ce que le solvant gazeux est recyclé dans le stade de l'extraction et en ce que la lécithine est obtenue sous forme solide après son retrait du stade d'extraction par l'évaporation du solvant.

2. Procédé selon la revendication 1, caractérisé en ce qu'on utilise comme solvant gazeux du gaz carbonique, de l'éthane et/ou de l'éthène ou un mélange d'un ou de plusieurs de ces gaz avec du méthane, du propane et/ou du propène.

3. Procédé selon la revendication 1 ou 2, caractérisé en ce que le solvant gazeux comporte un agent d'entraînement, de préférence de l'éthanol.

4. Procédé selon l'une quelconque des revendications 1 à 3, caractérisé en ce que les mucilages sont soumis à l'extraction par l'éthane entre 250 et 350 bars et entre 15 et 31 °C et en ce que l'isolement des substances extraites à partir de la phase de solvant comprimée chargée s'effectue entre 30 et 40 bars et entre 20 et 40 °C.

5. Procédé selon l'une quelconque des revendications 1 à 3, caractérisé en ce que les mucilages sont soumis à l'extraction par du gaz carbonique entre 300 et 500 bars et entre 5 et 30 °C et en ce que l'isolement des substances extraites à partir de la phase de solvant comprimée chargée s'effectue entre 10 et 30 bars et entre 5 et 30 °C.